# EUROPÄISCHE PATENTSCHRIFT

(11) **EP 3 546 767 B1**
(45) Veröffentlichungstag und Bekanntmachung des Hinweises auf die Patenterteilung: **11.05.2022**
(21) Anmeldenummer: 19160927.0
(22) Anmeldetag: 06.03.2019
(51) Int. Cl.: F16B 7/18, E04B 1/58, E04B 2/76

(54) **VERBINDER FÜR PROFILE EINES BAUKASTENSYSTEMS UND BAUKASTENSYSTEM**
CONSTRUCTION KIT SYSTEM AND CONNECTOR FOR PROFILES OF A CONSTRUCTION KIT SYSTEM
RACCORD POUR PROFILÉS D'UN SYSTÈME MODULAIRE ET SYSTÈME MODULAIRE

(30) Priorität: 27.03.2018 DE 102018204643
(43) Veröffentlichungstag der Anmeldung: 02.10.2019
(73) Patentinhaber: Robert Bosch GmbH, 70442 Stuttgart (DE)
(72) Erfinder: Pramod, Puthoor, 560068 Kudlu, Bangalore (IN); Willi, Marco, 71726 Benningen Am Neckar (DE)

(56) Entgegenhaltungen:
- WO-A2-01/55604
- DE-A1- 10 156 731
- DE-A1- 19 835 764
- DE-A1-102009 020 530
- DE-U1-202005 002 687

## Beschreibung

Die Erfindung betrifft einen Verbinder für Profile eines Baukastensystems für Tragstrukturen oder dergleichen gemäß dem Oberbegriff des Patentanspruchs 1 und ein entsprechendes Baukastensystem.

Aus dem Stand der Technik sind Baukastensysteme mit Profilen bekannt, die meistens Strangpressprofile aus Aluminium sind, und die z.B. an ihren vier Längsseiten jeweilige hinterschnittene Längsnuten haben, um daran andere Profile oder weitere Bauteile zu befestigen. Die Profile werden zunächst in verschiedenen Längen produziert und haben (zunächst per se) keine einstückigen Befestigungsmöglichkeiten für weitere Profile. Daher werden zur Befestigung einer Stirnseite eines ersten Profils an einer Längsseite eines zweiten Profils spezielle Verbinder benötigt. Deren Hauptkörper werden zunächst über die Stirnseite in die Längsnut des ersten Profils eingeschoben und dort befestigt. Ein spezielles Teil des Verbinders wird in die hinterschnittene Längsnut des zweiten Profils eingesetzt und hintergreift diese. Dann wird das Teil in Richtung zum Hauptkörper und damit die Längsseite des zweiten Profils in Richtung zur Stirnseite des ersten Profils gespannt.

In der Druckschrift DE 42 10 456 C2 ist ein derartiger Verbinder offenbart. Die Befestigung des Hauptkörpers in der Längsnut des ersten Profils erfolgt über eine Sicherungsschraube, die quer in den Hauptkörper eingeschraubt ist, und die in den Grund der Längsnut mit ihrer Körnerspitze eingreift. Das Spannen des zweiten Profils gegen die Stirnseite des ersten Profils erfolgt mit einem hammerförmigen Teil, dessen Kopf die Längsnut des zweiten Profils hintergreift und dessen Hals über eine schräg in den Hauptkörper eingeschraubte Spannschraube angezogen wird.

Die Druckschrift DE 101 56 731 B4 offenbart einen Verbinder mit einem rahmenartigen Hauptkörper, dessen Befestigung in der Längsnut des ersten Profils ebenfalls über eine Sicherungsschraube erfolgt, die quer in den Hauptkörper eingeschraubt ist, und die in den Grund der Längsnut mit einer Schneide eingreift. Das Anziehen des zweiten Profils erfolgt mittels einer Spannschraube, deren Kopf in einer Ausnehmung des Rahmens angeordnet ist, und deren Gewindeabschnitt sich in Richtung zum zweiten Profil erstreckt und dort in eine speziell geformte Spannmutter eingreift. Die Spannmutter ist in die Längsnut des zweiten Profils eingesetzt und hintergreift diese.

Schwierig bei der Verwendung des letztgenannten Verbinders ist die Positionierung der Profile.

Die DE 198 35 764 A1 zeigt einen Verbinder für Profile eines Baukastensystems, dessen Montage mittels eines Adapters vereinfacht ist.

Dem gegenüber soll der Adapter bzw. sein Hauptabschnitt in Querrichtung zur Längsnut des zweiten Profils betrachtet immer optimal zentriert am Hauptkörper befestigt sein, auch wenn der Adapter in Einschubrichtung nicht optimal präzise positioniert wurde.

Diese Aufgabe wird gelöst durch einen Verbinder mit den Merkmalen des Patentanspruchs 1 und durch ein Baukastensystem mit den Merkmalen des Patentanspruchs 13.

Weitere vorteilhafte Ausgestaltungen der Erfindung sind in den abhängigen Patentansprüchen beschrieben.

Der beanspruchte Verbinder hat einerseits einen Hauptkörper, der in einer hinterschnittene Längsnut eines ersten Profils eines Baukastensystems befestigbar ist, z.B. in die Längsnut einspannbar ist. Der Verbinder hat andererseits einer Spannmutter, die in eine hinterschnittene Längsnut eines zweiten Profils des Baukastensystems einsetzbar ist. Der Hauptkörper ist zumindest abschnittsweise von einer Spannschraube durchsetzt, die in die Spannmutter einschraubbar ist, womit die Spannmutter in Richtung zu einer Stirnseite des Hauptkörpers spannbar ist. Damit ist das zweite Profil in Richtung zur Stirnseite des ersten Profils spannbar. Erfindungsgemäß ist ein Adapter an dem Hauptkörper lösbar befestigt. Der Adapter dient als Positionierhilfe und/oder Verdrehsicherung für die beiden Profile. Dazu hat er einen Hauptabschnitt, der sich in Richtung zur Spannmutter erstreckt, und daher zur Positionierung in die Längsnut des zweiten Profils einsetzbar ist. Der Hauptabschnitt hat dabei eine vorbestimmte maximale Breite, die etwa einer Breite eines schmaleren äußeren Nutabschnitts der Längsnut des zweiten Profils entspricht.

Der Adapter ist vorzugsweise an einer Stirnseite des Hautkörpers lösbar befestigt, die der Spannmutter und damit dem zweiten Profil zugewandt ist.

Da der Adapter über eine Schiebeverbindung formschlüssig befestigbar oder befestigt ist, ist er einfach montierbar.

Erfindungsgemäß hat die Schiebeverbindung einerseits eine hinterschnittene Befestigungsnut und andererseits einen etwa T-förmigen Befestigungsabschnitt, der in die Befestigungsnut einschiebbar oder eingeschoben ist. Die Befestigungsnut und der Befestigungsabschnitt erstrecken sich senkrecht zum Hauptkörper und damit parallel zur Längsnut des zweiten Profils. Damit ist eine Einschubrichtung bei der Befestigung des Adapters am Hauptkörper senkrecht zu diesem und zu der Längsnut des zweiten Profils. Damit ist der Adapter bzw. sein Hauptabschnitt in Querrichtung zur Längsnut des zweiten Profils betrachtet immer optimal zentriert am Hauptkörper befestigt, auch wenn der Adapter in Einschubrichtung nicht optimal präzise positioniert wurde.

Bei einer besonders bevorzugten Weiterbildung ist einseitig an dem Hauptabschnitt ein Verlängerungsabschnitt ausgebildet, der sich etwa senkrecht zum Hauptkörper und damit entlang der Längsnut des zweiten Profils erstreckt. Die maximale Breite des Verlängerungsabschnitts entspricht der maximalen Breite des Hauptabschnitts.

Vorzugsweise ist die Erstreckung des Hauptabschnitts - gegebenenfalls auch mit dem Verlängerungsabschnitt - in Richtung der Längsnut des zweiten Profils größer als die Breite des Hauptabschnitts. Vorzugsweise ist die Breite des Hauptabschnitts (deutlich) größer als die Erstreckung des Hauptabschnitts in Richtung zur Spannmutter, also als eine Dicke des Hauptabschnitts. Damit ist der Hauptabschnitt - gegebenenfalls auch mit dem Verlängerungsabschnitt - im weitesten Sinne quaderförmig. Dann kann insbesondere die Weiterbildung des erfindungsgemäßen Verbinders mit der Schiebeverbindung, bei der die Befestigungsnut und der Befestigungsabschnitt sich senkrecht zum Hauptkörper und damit parallel zu der Längsnut des zweiten Profils erstrecken, dahingehend verwendet werden, dass der Verlängerungsabschnitt wahlweise in beide Richtungen senkrecht zum Hauptkörper und damit entlang der Längsnut des zweiten Profils ausgerichtet werden kann. Genauer gesagt kann der Adapter gemäß einer Option A am Hauptkörper befestigt werden, bei der er mit Bezug zum ersten Profil nach außen weist, und er kann gemäß einer Option B am Hauptkörper befestigt werden, bei der er mit Bezug zum ersten Profil nach innen weist. Option A ist geeignet, wenn die beiden Profile eine T-Form bilden, Option B ist geeignet, wenn die beiden Profile eine L-Form bilden.

Bei einem Ausführungsbeispiel hat der Verlängerungsabschnitt in Richtung zu der Spannmutter eine größere Erstreckung als der Hauptabschnitt. Damit hat der Verlängerungsabschnitt gegenüber dem Hauptabschnitt eine Verdickung, die sich in die Längsnut des zweiten Profils erstreckt.

Der Hauptkörper kann rahmenartig sein, wobei er einen ersten Quersteg, einen zweiten Quersteg und eine mittlere Ausnehmung aufweist. In der Ausnehmung ist ein Kopf der Spannschraube angeordnet.

Der erste Quersteg kann eine Durchgangsausnehmung aufweisen, die von der Spannschraube durchsetzbar oder durchsetzt ist.

Insbesondere wenn der erste Quersteg die Durchgangsausnehmung hat, wird es bevorzugt, wenn auch der Adapter oder besonders bevorzugt sein Hauptabschnitt eine entsprechende Durchgangsausnehmung aufweist, die von der Spannschraube durchsetzbar oder durchsetzt ist.

Wenn z.B. die hinterschnittene Befestigungsnut an der Stirnseite des Hauptkörpers ausgebildet ist, wird es aus Gründen der Stabilität und der festen Verbindung des Adapters am Hauptkörper bevorzugt, wenn der etwa T-förmige Befestigungsabschnitt und ein weiterer etwa T-förmiger Befestigungsabschnitt an dem Adapter oder an seinem Hauptabschnitt beidseitig der Durchgangsausnehmung angeordnet sind.

Eine Sicherungsschraube kann in den Hauptkörper, insbesondere in den zweiten Quersteg eingeschraubt sein. Damit wird der Hauptkörper in der Längsnut des ersten Profils gehalten. Dabei wird es besonders bevorzugt, wenn die Sicherungsschraube einen flachen oder balligen oder verrundeten Endabschnitt aufweist, der gegen einen Grund der Längsnut des ersten Profils spannbar ist.

Für einen sicheren Halt des Hauptkörpers in der Längsnut des ersten Profils wird es bevorzugt, wenn der Hauptkörper an einer dem Endabschnitt der Sicherungsschraube gegenüber liegenden (mit Bezug zum ersten Profil betrachtet) äußeren Seite oder Anlage eine Profilierung aufweist, die über die Sicherungsschraube von innen gegen die Längsnut des ersten Profils spannbar ist.

Vorzugsweise weist auch die Spannmutter an einer dem Hauptkörper zugewandten Seite oder Anlage eine Profilierung auf. Damit wird ein Herausrutschen der Spannmutter aus der Längsnut des zweiten Profils verhindert.

Das erfindungsgemäße Baukastensystem hat mindestens ein erstes Profil und ein zweites Profil mit jeweiligen Längsnuten, die jeweils einen äußeren schmaleren Nutabschnitt und einen inneren breiteren Nutabschnitt haben, womit die Längsnuten hinterschnitten sind. Das Baukastensystem hat mindestens einen vorbeschriebenen Verbinder, wobei die maximale Breite des Hauptabschnitts des Adapters - und damit gegebenenfalls auch die Breite des Verlängerungsabschnitts - etwa der Breite des äußeren schmaleren Nutabschnitts der Längsnuten entspricht.

Ein Ausführungsbeispiel eines erfindungsgemäßen Verbinders für Profile und eines erfindungsgemäßen Baukastensystems ist in den Figuren dargestellt.

Es zeigen:
Figur 1 in einer perspektivischen Ansicht das erfindungsgemäße Baukastensystem mit zwei Profilen und mit einem Verbinder (Option A);
Figur 2 in einer Explosionszeichnung den Verbinder aus Figur 1 (Option A);
Figur 3 in einer perspektivischen Ansicht den Hauptkörper des Verbinders aus Figur 2;
Figur 4 in einer perspektivischen Ansicht den Adapter des Verbinders aus Figur 2;
Figur 5 in einer perspektivischen Ansicht einen Ausschnitt des Verbinders (Option B); und
Figur 6 in einer perspektivischen Ansicht das erfindungsgemäße Baukastensystem mit zwei Profilen und mit dem Verbinder aus Figur 5 (Option B).

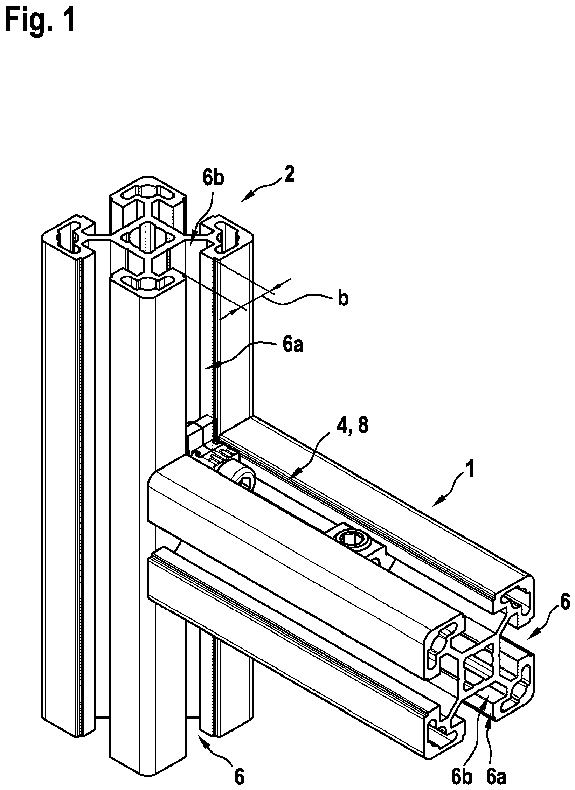

Figur 1 zeigt in einer perspektivischen Ansicht wesentliche Teile des erfindungsgemäßen Baukastensystems, nämlich ein erstes Profil 1, und ein zweites Profil 2, die beide als Alu-Strangpressprofile ausgebildet sind, und mit einem Verbinder 4, der zur Befestigung der beiden Profile 1, 2 aneinander dient. Die beiden Profile 1, 2 haben einen im Wesentlichen quadratischen Querschnitt, wobei mittig in jeder der vier Längsseiten eine hinterschnittene Längsnut 6 vorgesehen ist.

Jede Längsnut 6 hat benachbart zur Längsseite also in einem äußeren Bereich des Profils 1, 2 einen schmaleren Nutabschnitt 6a mit der Breite b und weiter im Innern des Profils 2 einen breiteren Nutabschnitt 6b. Dadurch sind die Längsnuten 6 hinterschnitten und von dem Verbinder 4 hintergreifbar. Genauer gesagt wird die Längsnut 6 des ersten Profils 1 von einem Hauptkörper 8 des Verbinders 4 hintergriffen, während die Längsnut 6 des zweiten Profils 2 von einer (in Figur 1 nicht gezeigten) Spannmutter hintergriffen wird.

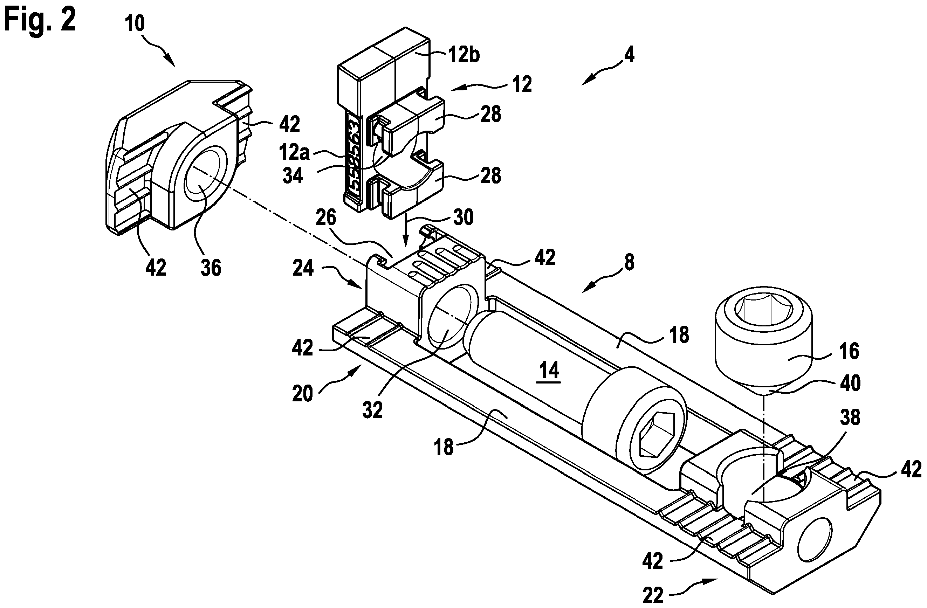

Figur 2 zeigt in einer perspektivischen Explosionszeichnung den Verbinder 4 aus Figur 1. Dabei ist auch die Spannmutter 10 dargestellt, die die Längsnut 6 des zweiten Profils 2 (vergleiche Figur 1) hintergreift. Weiterhin sind auch der Hauptkörper 8, ein Adapter 12, eine Spannschraube 14 und eine Sicherungsschraube 16 gezeigt. Der Hauptkörper 8 ist rahmenartig ausgebildet und hat dazu zwei Längsstege 18, einen ersten Quersteg 20 und einen zweiten Quersteg 22. Der erste Quersteg 20 ist an der zur Spannmutter 10 und damit zum zweiten Profil 2 gerichteten Seite des Hauptkörpers 8 angeordnet, während der zweite Steg 22 an der von der Spannmutter 10 abgewandten Seite des Hauptkörpers 8 angeordnet ist. Der gesamte Hauptkörper 8 wird in die Längsnut 6 des ersten Profils 1 eingeschoben.

An einer zur Spannmutter 10 und damit zum zweiten Profil 2 gerichteten Stirnseite 24 des Hauptkörpers 8 bzw. des ersten Querstegs 20 ist eine hinterschnittende Befestigungsnut 26 vorgesehen, in die zwei etwa T-förmige Befestigungsabschnitte 28 des Adapters 12 eingeschoben werden können. Dieses Einschieben erfolgt in einer (in Figur 2 senkrechten) Einschubrichtung 30, die parallel zur Längsnut 6 des zweiten Profils 2 gerichtet ist.

Der erste Quersteg 20 und der Adapter 12 haben jeweils eine Durchgangsausnehmung 32, 34, durch die sich im montierten und eingespannten Zustand des Verbinders 4 die Spannschraube 14 erstreckt und in eine Gewindebohrung 36 der Spannmutter 10 eingreift.

In dem eingebauten und eingespannten Zustand des Verbinders 4 ist die als Madenschraube ausgebildete Sicherungsschraube 16 in eine Gewindebohrung 38 des zweiten Steges 22 eingeschraubt und dabei mit einem verrundeten Endabschnitt 40 gegen einen Grund der Längsnut 6 des ersten Profils 1 gespannt. Damit wird die (in Figur 2) obere Seite des Hauptkörpers 8 an entsprechende Anlageflächen der Längsnut 6 des ersten Profils 1 gepresst. Um ein Herausrutschen des Hauptkörpers 8 aus der Längsnut 6 des ersten Profils 1 zu verhindern, sind zusätzlich in vier Eckbereichen des rahmenförmigen Hauptkörpers 8 jeweilige Profilierungen 42 vorgesehen.

Auch an der in Figur 2 sichtbaren Seite der Spannmutter 10, die im eingebauten und eingespannten Zustand des Verbinders 4 von innen gegen die Längsnut 6 des zweiten Profils 2 gespannt wird, sind Profilierungen 42 vorgesehen, obwohl im Falle der Spannmutter 10 die Gefahr eines Herausrutschens deutlich geringer ist als im Falle des Hauptkörpers 8.

Der Verbinder 4 ist vormontiert, d.h. die Spannschraube 14 ist mit der Spannmutter 10 bereits verbunden. Während der Montage des Verbinders 4 müssen die beiden Profile 1, 2 in der in Figur 1 gezeigten Endstellung gehalten werden. Dazu dient der erfindungsgemäße Adapter 12, der zur Ausrichtung der Längsnut des Profils 1 zur Längsnut des Profils 2 dient und eine Verdrehsicherung gewährleistet, so dass die beiden Profile 1, 2 zueinander ausgerichtet montiert werden können. Der Adapter 12 weist einen Hauptabschnitt 12a und einen Verlängerungsabschnitt 12b auf. Der Hauptabschnitt 12a erstreckt sich allseits der Durchgangsausnehmung 32. Der Verlängerungsabschnitt 12b erstreckt sich einseitig ausgehend vom Hauptabschnitt 12a und ist (in den Figuren 1 und 2 nach oben und damit) mit Bezug zum ersten Profil 1 nach außen gerichtet. Diese Einbaulage wird mit Option A bezeichnet und wird gewählt, wenn die beiden Profile 1, 2 in der in Figur 1 gezeigten T-Stellung aneinander montiert werden.

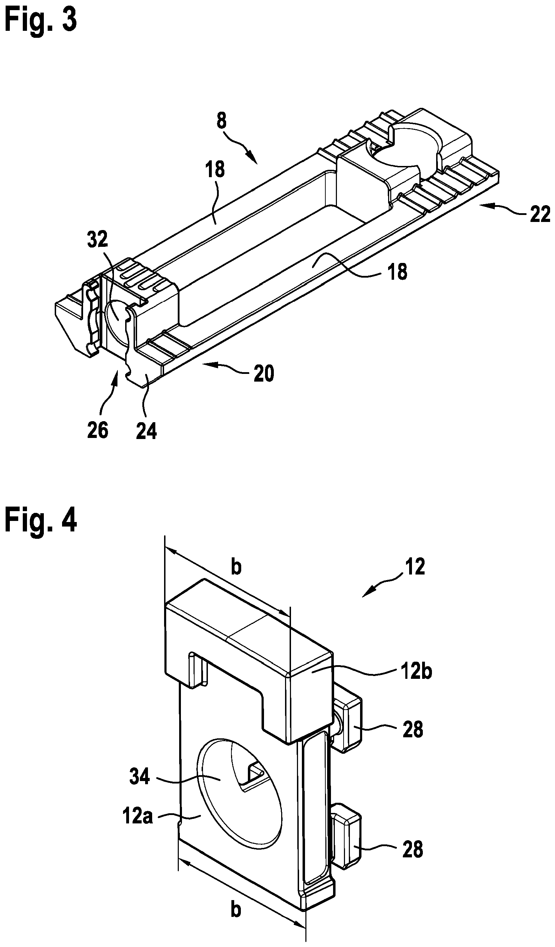

Figur 3 zeigt den Hauptkörper 8 des Verbinders 4 in einer perspektivischen Darstellung, sodass die hinterschnittene Befestigungsnut 26 an der Stirnseite 24 des ersten Querstegs 20 bzw. des Hauptkörpers 8 sichtbar ist. Weiterhin ist eine Mündung der Durchgangsausnehmung 32 in den Grund der Befestigungsnut 26 zu erkennen.

Figur 4 zeigt in einer perspektivischen Darstellung den Adapter 12, wobei die gezeigte Position zur Position des Hauptkörpers 8 aus Figur 3 passt, wenn die Option A gewünscht ist, bei der sich der Verlängerungsabschnitt 12b ausgehend vom Hauptabschnitt 12a (mit Bezug zum Profil 1) nach außen erstreckt. In Figur 4 ist die Durchgangsausnehmung 34 des Adapters 12 bzw. seines Hauptabschnitts 12a zu erkennen, dessen Mittelachse und Durchmesser denjenigen der Durchgangsausnehmung 32 des ersten Quersteges 20 (vergleiche Figur 3) entspricht.

Die Breite b des Verlängerungsabschnitts 12b entspricht der maximalen Breite b des Hauptabschnitts 12a und der minimalen Breite b des schmaleren Nutabschnitts 6a der Längsnuten 6 der Profile 1, 2 (vergleiche Figur 1). Damit dient der Adapter 12 als präzise Positionierhilfe und Verdrehsicherung zur einfachen Montage und Ausrichtung der beiden Profile 1, 2 zueinander.

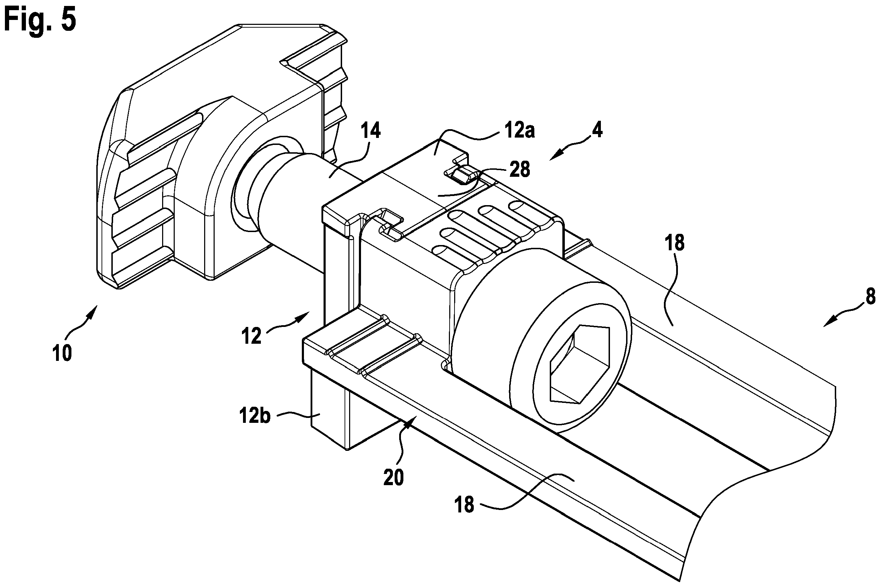

Figur 5 zeigt in einer perspektivischen Ansicht einen Ausschnitt des Verbinders 4, wobei der Adapter 12 derart am Hauptabschnitt 8 befestigt ist, dass sein Verlängerungsabschnitt 12b (in Figur 5 nach unten und damit) mit Bezug zum ersten Profil 1 nach innen gerichtet ist. Damit ist der erfindungsgemäße Verbinder 4 in der Option B zusammengebaut.

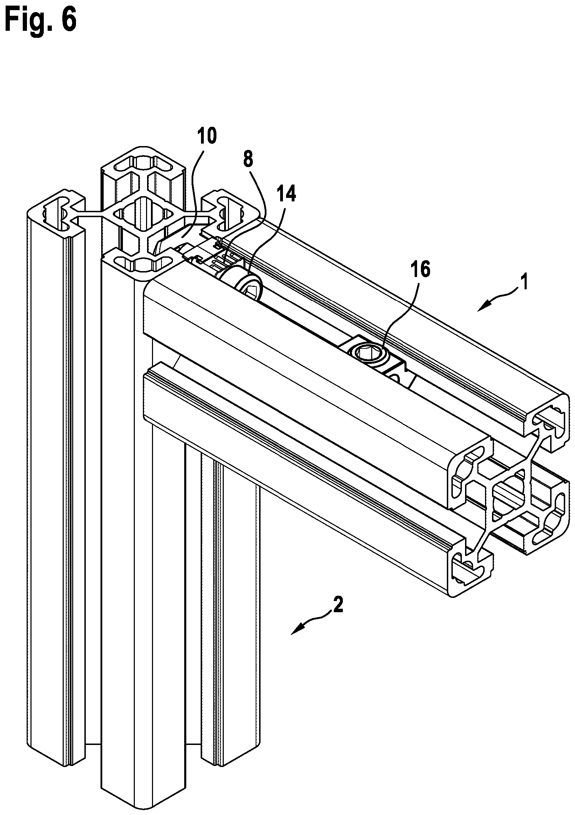

Figur 6 zeigt die Profile 1 und 2, die in einer L-Form miteinander verbunden sind. In dieser Situation wird der Verbinder 4 gemäß der in Figur 5 gezeigten Option B zusammengebaut. Damit ragt der Verlängerungsabschnitt 12b des Adapters 12 nicht aus der Fläche hinaus, die in Figur 6 aus der oberen Seitenfläche des ersten Profils 1 und aus der Stirnseite des zweiten Profils 2 gebildet wird.

Bei beiden Optionen ist der Verbinder 4 vormontiert, d.h. die Spannschraube 14 ist mit der Spannmutter 10 bereits verbunden. Der Verbinder 4 wird in diesem vormontierten Zustand in das erste Profil 1 stirnseitig eingeschoben, bis die Stirnfläche 24 des Hauptkörpers 8 und die Stirnfläche des Profils 1 bündig sind. Danach wird der der Verbinder 4 über die als Wurmschraube ausgebildete Sicherungsschraube 16 im Profil 1 fixiert.

Nun wird das zweite Profil 2 an das erste Profil 1 angesetzt, wobei die Ausrichtung der Spanmutter 10 so ist, dass sie durch die schmalere Längsnut 6 des zweiten Profils 2 gesteckt werden kann. Beim Ansetzten des zweiten Profils 2 an des erste Profil 1 werden die Profile 1, 2 über den Adapter 12 zueinander automatisch ausgerichtet, so dass ihre Längsnuten 6 in einer Flucht liegen.

Nun wird durch Drehen bzw. Anziehen der Spannschraube 14 die Spannmutter 10 im zweiten Profil 2 um 90 Grad gedreht und angezogen.

Offenbart ist ein Verbinder für Profile eines Baukastensystems, wobei der Verbinder einen Adapter aufweist, der als Positionierhilfe und Verdrehsicherung dient.

Weiterhin ist auch ein entsprechendes Baukastensystem offenbart.

### Bezugszeichenliste:

- 1: erstes Profil
- 2: zweites Profil
- 4: Verbinder
- 6: Längsnut
- 6a: schmalerer Nutabschnitt
- 6b: breiterer Nutabschnitt
- 8: Hauptkörper
- 10: Spannmutter
- 12: Adapter
- 12a: Hauptabschnitt
- 12b: Verlängerungsabschnitt
- 14: Spannschraube
- 16: Sicherungsschraube
- 18: Längssteg
- 20: erster Quersteg
- 22: zweiter Quersteg
- 24: Stirnseite
- 26: hinterschnittene Befestigungsnut
- 28: T-förmiger Befestigungsabschnitt
- 30: Einschubrichtung
- 32: Durchgangsausnehmung
- 34: Durchgangsausnehmung
- 36: Gewindebohrung
- 38: Gewindebohrung
- 40: verrundeter Endabschnitt
- 42: Profilierung

- b: Breite

## Patentansprüche

1. Verbinder zum Verbinden zweier Profile (1, 2), wobei der Verbinder einen Hauptkörper aufweist, der zumindest abschnittsweise von einer Spannschraube (14) durchsetzt ist, die in eine Spannmutter (10) einschraubbar oder eingeschraubt ist, mit einem Adapter (12), der an dem Hauptkörper (8) befestigbar oder befestigt ist, und der einen Hauptabschnitt (12a) hat, der sich in Richtung zur Spannmutter (10) erstreckt, und der eine vorbestimmte Breite (b) hat, womit er als Positionierhilfe und/oder Verdrehsicherung für die beiden Profile (1, 2) dient, **dadurch gekennzeichnet, dass** der Adapter (12) über eine Schiebeverbindung formschlüssig befestigbar oder befestigt ist, wobei die Schiebeverbindung eine hinterschnittene Befestigungsnut (26) und einen darin einschiebbaren oder eingeschobenen etwa T-förmigen Befestigungsabschnitt (28) aufweist, wobei eine Einschubrichtung (30) senkrecht zum Hauptkörper (8) ist.

2. Verbinder nach Anspruch 1, wobei der Adapter (12) an einer der Spannmutter (10) zugewandten Stirnseite (24) des Hauptkörpers (8) befestigbar oder befestigt ist.

3. Verbinder nach einem der vorhergehenden Ansprüche, wobei an dem Hauptabschnitt (12a) ein Verlängerungsabschnitt (12b) ausgebildet ist, der sich etwa senkrecht zum Hauptkörper (8) erstreckt, und dessen Breite (b) derjenigen des Hauptabschnitts (12a) entspricht.

4. Verbinder nach Anspruch 3, wobei der Adapter (12) in zwei verschiedene Orientierungen montierbar ist, bei denen sich der Verlängerungsabschnitt (12b) in zwei verschiedene Richtungen erstreckt.

5. Verbinder nach Anspruch 3 oder 4, wobei der Verlängerungsabschnitt (12b) eine Verdickung gegenüber dem Hauptabschnitt (12a) aufweist, die sich in Richtung zur Spannmutter (10) erstreckt.

6. Verbinder nach einem der vorhergehenden Ansprüche, wobei der Hauptkörper (8) rahmenartig ist, und wobei der Hauptkörper (8) einen ersten Quersteg (20), einen zweiten Quersteg (22) und eine mittlere Ausnehmung aufweist, in der ein Kopf der Spannschraube (14) angeordnet ist.

7. Verbinder nach Anspruch 6, wobei der erste Quersteg (20) eine Durchgangsausnehmung (32) aufweist, die von der Spannschraube (14) durchsetzt ist.

8. Verbinder nach einem der vorhergehenden Ansprüche, wobei der Adapter (12) oder sein Hauptabschnitt (12a) eine Durchgangsausnehmung (34) aufweist, die von der Spannschraube (14) durchsetzt ist.

9. Verbinder nach Anspruch 8, wobei die hinterschnittene Befestigungsnut (26) an der Stirnseite (24) des Hauptkörpers (8) ausgebildet ist, und wobei der etwa T-förmige Befestigungsabschnitt (28) und ein weiterer etwa T-förmiger Befestigungsabschnitt (28) an dem Adapter (12) oder an seinem Hauptabschnitt (12a) beidseitig der Durchgangsausnehmung (34) angeordnet sind.

10. Verbinder nach einem der vorhergehenden Ansprüche, mit einer Sicherungsschraube (16) **dadurch gekennzeichnet, dass** die Sicherungsschraube (16) einen flachen oder balligen oder verrundeten Endabschnitt (40) aufweist.

11. Verbinder nach Anspruch 10, wobei der Hauptkörper (8) an einer dem Endabschnitt (40) der Sicherungsschraube (16) gegenüber liegenden Seite oder Anlage eine Profilierung (42) aufweist.

12. Verbinder nach einem der vorhergehenden Ansprüche, wobei die Spannmutter (10) an einer dem Hauptkörper (8) zugewandten Seite oder Anlage eine Profilierung (42) aufweist.

13. Baukastensystem mit einem ersten Profil (1) und mit einem zweiten Profil (2), wobei beide Profile (1, 2) jeweilige Längsnuten (6) aufweisen, die jeweils einen äußeren schmaleren Nutabschnitt (6a) und einen inneren breiteren Nutabschnitt (6b) haben, womit die Längsnuten (6) hinterschnitten sind, und mit einem Verbinder (4) gemäß einem der vorhergehenden Ansprüche, wobei die Breite (b) des Hauptabschnitts (12a) des Adapters (12) etwa der Breite (b) des äußeren schmaleren Nutabschnitts (6a) entspricht.

## Claims

1. Connector for connecting two profiles (1, 2), wherein the connector has a main body which is traversed at least in certain portions by a clamping screw (14) which can be or is screwed into a clamping nut (10), having an adapter (12) which can be or is fastened to the main body (8) and which has a main portion (12a) which extends in the direction of the clamping nut (10) and which has a predetermined width (b), whereby it serves as a positioning aid and/or anti-twist safeguard for the two profiles (1, 2), **characterized in that** the adapter (12) can be or is fastened in a form-fitting manner by way of a sliding connection, wherein the sliding connection has an undercut fastening groove (26) and an approximately T-shaped fastening portion (28) which can be or is inserted therein, wherein an insertion direction (30) is perpendicular to the main body (8) .

2. Connector according to Claim 1, wherein the adapter (12) can be or is fastened to an end side (24) of the main body (8) that faces the clamping nut (10).

3. Connector according to either of the preceding claims, wherein the main portion (12a) has formed thereon an extension portion (12b) which extends approximately perpendicularly to the main body (8) and whose width (b) corresponds to that of the main portion (12a).

4. Connector according to Claim 3, wherein the adapter (12) can be mounted in two different orientations in which the extension portion (12b) extends in two different directions.

5. Connector according to Claim 3 or 4, wherein the extension portion (12b) has a thickening with respect to the main portion (12a) that extends in the direction of the clamping nut (10).

6. Connector according to one of the preceding claims, wherein the main body (8) is frame-like, and wherein the main body (8) has a first transverse web (20), a second transverse web (22) and a central aperture in which a head of the clamping screw (14) is arranged.

7. Connector according to Claim 6, wherein the first transverse web (20) has a through-aperture (32) which is traversed by the clamping screw (14).

8. Connector according to one of the preceding claims, wherein the adapter (12) or its main portion (12a) has a through-aperture (34) which is traversed by the clamping screw (14).

9. Connector according to Claim 8, wherein the undercut fastening groove (26) is formed on the end side (24) of the main body (8), and wherein the approximately T-shaped fastening portion (28) and a further approximately T-shaped fastening portion (28) are arranged on the adapter (12) or on its main portion (12a) on both sides of the through-aperture (34).

10. Connector according to one of the preceding claims, having a securing screw (16), **characterized in that** the securing screw (16) has a flat or crowned or rounded end portion (40).

11. Connector according to Claim 10, wherein the main body (8) has a profiling (42) on a side or bearing surface that is situated opposite to the end portion (40) of the securing screw (16).

12. Connector according to one of the preceding claims, wherein the clamping nut (10) has a profiling (42) on a side or bearing surface that faces the main body (8).

13. Modular system having a first profile (1) and having a second profile (2), wherein both profiles (1, 2) have respective longitudinal grooves (6) which each have an outer narrower groove portion (6a) and an inner wider groove portion (6b), whereby the longitudinal grooves (6) are undercut, and having a connector (4) according to one of the preceding claims, wherein the width (b) of the main portion (12a) of the adapter (12) approximately corresponds to the width (b) of the outer narrower groove portion (6a).

## Revendications

1. Raccord servant à raccorder deux profilés (1, 2), le raccord comprenant un corps principal qui est traversé au moins dans certaines parties par une vis de serrage (14) qui peut être vissée ou est vissée dans un écrou de serrage (10), comportant un adaptateur (12) qui peut être fixé ou est fixé au corps principal (8) et qui a une partie principale (12a) qui s'étend en direction de l'écrou de serrage (10) et qui a une largeur prédéfinie (b), moyennant quoi il sert d'auxiliaire de positionnement et/ou de fixation anti-rotation pour les deux profilés (1, 2), **caractérisé en ce que** l'adaptateur (12) peut être fixé ou est fixé par complémentarité de formes par le biais d'une liaison coulissante, la liaison coulissante comprenant une rainure de fixation (26) en contre-dépouille et une partie de fixation (28) approximativement en forme de T pouvant être insérée ou insérée dans celle-ci, une direction d'insertion (30) étant perpendiculaire au corps principal (8).

2. Raccord selon la revendication 1, l'adaptateur (12) pouvant être fixé ou étant fixé à un côté frontal (24), tourné vers l'écrou de serrage (10), du corps principal (8).

3. Raccord selon l'une des revendications précédentes, une partie de prolongement (12b) étant réalisée sur la partie principale (12a), laquelle partie de prolongement s'étend approximativement perpendiculairement au corps principal (8), et sa largeur (b) correspond à celle de la partie principale (12a).

4. Raccord selon la revendication 3, l'adaptateur (12) pouvant être monté dans deux orientations différentes, dans lesquelles la partie de prolongement (12b) s'étend dans deux directions différentes.

5. Raccord selon la revendication 3 ou 4, la partie de prolongement (12b) comprenant un renflement par rapport à la partie principale (12a), lequel s'étend en direction de l'écrou de serrage (10).

6. Raccord selon l'une des revendications précédentes, le corps principal (8) étant de type cadre, et le corps principal (8) comprenant une première nervure transversale (20), une deuxième nervure transversale (22) et un évidement central dans lequel une tête de la vis de serrage (14) est disposée.

7. Raccord selon la revendication 6, la première nervure transversale (20) comprenant un évidement de passage (32) qui est traversé par la vis de serrage (14).

8. Raccord selon l'une des revendications précédentes, l'adaptateur (12) ou sa partie principale (12a) comprenant un évidement de passage (34) qui est traversé par la vis de serrage (14).

9. Raccord selon la revendication 8, la rainure de fixation (26) en contre-dépouille étant réalisée sur le côté frontal (24) du corps principal (8), et la partie de fixation (28) approximativement en forme de T et une autre partie de fixation (28) approximativement en forme de T étant disposées sur l'adaptateur (12) ou sur sa partie principale (12a) des deux côtés de l'évidement de passage (34).

10. Raccord selon l'une des revendications précédentes, comportant une vis de fixation (16), **caractérisé en ce que** la vis de fixation (16) comprend une partie d'extrémité (40) plate ou bombée ou arrondie.

11. Raccord selon la revendication 10, le corps principal (8) comprenant un profilage (42) sur un côté ou un appui opposé à la partie d'extrémité (40) de la vis de fixation (16).

12. Raccord selon l'une des revendications précédentes, l'écrou de serrage (10) comprenant un profilage (42) sur un côté ou un appui tourné vers le corps principal (8).

13. Système modulaire comportant un premier profilé (1) et comportant un deuxième profilé (2), les deux profilés (1, 2) comprenant des rainures longitudinales (6) respectives qui ont respectivement une partie de rainure (6a) extérieure plus étroite et une partie de rainure (6b) intérieure plus large, moyennant quoi les rainures longitudinales (6) sont en contre-dépouille, et comportant un raccord (4) selon l'une des revendications précédentes, la largeur (b) de la partie principale (12a) de l'adaptateur (12) correspondant approximativement à la largeur (b) de la partie de rainure (6a) extérieure plus étroite.
